# EUROPEAN PATENT SPECIFICATION

(11) **EP 3 955 112 B1**
(45) Date of publication and mention of the grant of the patent: **09.12.2026**
(21) Application number: 21174358.8
(22) Date of filing: 18.05.2021
(51) Int. Cl.: G06F 11/10

(54) **METHOD AND APPARATUS FOR MEMORY ERROR DETECTION**
VERFAHREN UND VORRICHTUNG ZUR ERKENNUNG VON SPEICHERFEHLERN
PROCÉDÉ ET APPAREIL DE DÉTECTION D'ERREURS DE MÉMOIRE

(30) Priority: 14.08.2020 US 202016993986
(43) Date of publication of application: 16.02.2022
(73) Proprietor: Rockwell Automation Technologies, Inc., Mayfield Heights, OH 44124-6188 (US)
(72) Inventor: GIBART, Anthony G., Mayfield Heights (US); IZZO, Joseph P., Mayfield Heights (US); ENGDAHL, Jonathan R., Mayfield Heights (US); NAVE, Benjamin H., Mayfield Heights (US)
(74) Representative: Grünecker Patent- und Rechtsanwälte PartG mbB

(56) References cited:
- DE-A1- 102010 042 574
- US-A1- 2003 131 197
- US-A1- 2010 188 972
- US-A1- 2016 034 368
- US-B1- 6 757 766

## Description

### BACKGROUND INFORMATION

The subject matter disclosed herein relates to detecting a memory error in a system with multiple processing domains, and, more specifically, to an industrial controller configured to meet safety integrity level three (SIL-3) functional safety with a single processor chip.

Industrial controllers are special-purpose computers used in controlling industrial processes. Under the direction of a stored control program, an industrial controller examines a series of inputs reflecting the status of the controlled process and changes a series of outputs controlling the process. The inputs and outputs may be binary, that is, on or off, or analog, providing a value within a substantially continuous range. The inputs may be obtained from sensors attached to the controlled process, and the outputs may be signals to actuators on the controlled process.

"Safety industrial control systems" are industrial control systems intended to ensure the safety of humans working in the environment of an industrial process. Such systems may include the electronics associated with emergency-stop buttons, light curtains, and other machine lockouts. Safety industrial control systems are not optimized for "availability", that is being able to function for long periods of time without error, but rather for "safety" which is being able to accurately detect an operating condition requiring a shut down. Safety industrial controllers normally provide a predetermined safe state for their outputs upon a safety shutdown, the predetermined values of these outputs being intended to put the industrial process into its safest static mode.

Safety industrial control systems may be associated with a "safety integrity level" (SIL) indicating a given amount of risk reduction. Standard IEC EN 61508 defines four SIL levels of STL-1 to SIL-4 with higher numbers representing higher amounts of risk reduction. To achieve SIL-3 functional safety, high diagnostic coverage of critical components is required such that a failure of a critical component does not go undetected.

A common method for providing the required diagnostic coverage is to provide redundant components. Each component is configured to generate an identical signal, execute identical processing steps, or the like. While one of the components may be selected as an active component and may be configured to interface with the controlled machine or process, both the active component and a backup component operate in tandem and operation of the components may be compared to each other. A comparison of signals generated or processing steps executed should return identical results if both components are operating normally. A difference between the operation of the two components indicates failure of one of the components and the system may take the necessary steps to enter a safe operating state.

The redundancy involved with providing safety systems is relatively expensive and accordingly there is considerable interest in lowering the price point of such systems such as could increase their relative availability and thus overall safety of the community. One significant source of cost is the need for multiple microprocessors. Recent processor architectures used in industrial controllers have moved to "multicore" architectures in which multiple processing cores are contained inexpensively on a single integrated circuit die.

The use of multiple processing cores on a single chip does not, however, eliminate all redundancy associated with multiple microprocessors. Accompanying multiple microprocessors are similarly redundant memory devices as well as memory controllers interconnected between the microprocessor and the memory device. In order to maintain redundancy, each processing core on a single integrated circuit die would still require a separate memory controller and separate memory. The memory controller is a power intensive device and the redundant memory devices require more physical space on a circuit board than a single memory device having similar storage capacity.

Thus, it would be desirable to provide an improved system for managing memory usage for multiple processing domains.
US 2003/0131197 A1 relates to error detection in storage systems. A data integrity device may calculate checksums for data both as it is stored to a storage array and at a later time. For example, the data integrity device may calculate a checksum as the data is written to the storage array. After the data has been written to a disk within the storage array, the data integrity device may read the data that was actually stored to disk, recalculate the checksum, and compare the recalculated checksum to the original checksum. This way, the data integrity device may determine whether any silent errors occurred when the data was written to disk.
US 2010/0188972 A1 relates to a data communication system that preferably uses bi-directional communication links between network nodes to send frames of data. A CRC checksum field could provide error protection for a message in a current data frame. A network controller in the sending node computes the checksum for a length field, an address field, and a data field, and sends the result in a CRC field. Any receiving node computes another checksum for the same fields and compares the result with the value in the received CRC field. If they are the same, the message has been received properly, although the message may still be rejected by a full receive buffer, and if they are different, the message incurred some bit errors and is rejected.
US 6,757,766 B1 relates to a bus for a highly scalable multiprocessor system and to a redundant bus system that uses this bus. An allocation between addresses transmitted on an address line and data transmitted on data lines occurs with the aid of identifiers transmitted on two identifier lines. These transaction identifiers consist of a number of the subscriber and a transaction number, for example. Since the number of active transactions per bus subscriber is limited, a relatively small number of bits suffices for the identification. When a bus subscriber starts a transaction on the bus, the subscriber first applies for the right to operate the address bus. Prior to a grant of the right to operate by an access control device, the bus subscriber simultaneously sends out in parallel a command via a command line, an address via the address lines, an identifier via the address identification line, and a check sum over all these signals via the address check sum lines.
US 2016/0034368 A1 relates to a semiconductor device that includes a computing unit including a first CPU core and a second CPU core that perform a lock step operation, wherein the first CPU core and the second CPU core respectively diagnose failures of internal logic circuits, and a sequence control circuit switches the CPU core that outputs data to a shared resource, in the computing unit based on the diagnose result.
DE 10 2010 042 574 A1 relates to a technique for operating a microcontroller of an automobile. The technique involves executing functions by a microcontroller, where a first function defines a lowest reliability requirement and a third function defines a highest reliability requirement. The third function is interrupted by a mechanism in such a way that third functions are executed without interference from executing other functions. The second functions are interrupted by a mechanism in such a way that the second functions are executed without interference from the execution of first functions.

### Brief description

It is the object of the present invention to improve prior art systems. This object is solved by the subject matter of the independent claims. Preferred embodiments are defined by the dependent claims.

According to one embodiment of the invention, a method for detecting a memory error includes writing data to a memory address in a shared memory resource from a first processing domain, generating a diagnostic code with the first processing domain as a function of the data and of the memory address, and appending the diagnostic code to the data such that the diagnostic code is written in the shared memory resource with the corresponding data. The data and the diagnostic code are read from the shared memory resource back to the first processing domain, and the first processing domain verifies that the data read from the shared memory resource matches the data written to the shared memory resource.

According to another embodiment of the invention, an apparatus for detecting a memory error includes a shared memory resource configured to store data, a memory controller, a first processing domain, and a second processing domain. The memory controller is configured to manage reading the data from and writing the data to the shared memory resource. The first processing domain is in communication with the memory controller and is configured to write the data to the shared memory resource via the memory controller, generate a first diagnostic code corresponding to the first processing domain, the data to be written, and to a memory address at which the data is to be written, and append the first diagnostic code to the data as it is written to the shared memory resource. The second processing domain is in communication with the memory controller and is configured to write the data to the shared memory resource via the memory controller, generate a second diagnostic code corresponding to the second processing domain, the data to be written, and to a memory address at which the data is to be written, and append the second diagnostic code to the data as it is written to the shared memory resource. Either the first or the second processing domain is further configured to read the data from the shared memory resource via the memory controller, and verify that the data read from the shared memory resource matches the data written to the shared memory resource.

According to still another embodiment of the invention, a method for detecting a memory error writes data to a memory address in a shared memory resource via a shared memory controller from either a first processing domain or a second processing domain and appends a diagnostic code to the data as the data is written by either the first processing domain or the second processing domain. The diagnostic code is generated as a function of the data, the memory address, and the corresponding processing domain from which it is written. The data is read from the memory address in the shared memory resource with the corresponding processing domain that wrote the data to the memory address, and the data read from the memory address in the shared memory resource is verified that it matches the data written to the memory address using the diagnostic code appended to the data.

These and other advantages and features of the invention will become apparent to those skilled in the art from the detailed description and the accompanying drawings. It should be understood, however, that the detailed description and accompanying drawings, while indicating preferred embodiments of the present invention, are given by way of illustration and not of limitation.

### BRIEF DESCRIPTION OF THE DRAWINGS

Various exemplary embodiments of the subject matter disclosed herein are illustrated in the accompanying drawings in which like reference numerals represent like parts throughout, and in which:
FIG. 1 is a block diagram representation of an exemplary multicore processor incorporating one embodiment of the present invention;
FIG. 2 is a block diagram representation of data being written by one core of the processor illustrated in Fig. 1;
FIG. 3 is a flow diagram illustrating the steps for writing data to a shared memory resource by one of the cores in the processor of Fig. 1 according to one embodiment of the invention; and
FIG. 4 is a flow diagram illustrating the steps for reading data from a shared memory resource by one of the cores in the processor of Fig. 1 according to one embodiment of the invention.

In describing the various embodiments of the invention which are illustrated in the drawings, specific terminology will be resorted to for the sake of clarity. However, it is not intended that the invention be limited to the specific terms so selected and it is understood that each specific term includes all technical equivalents which operate in a similar manner to accomplish a similar purpose. For example, the word "connected," "attached," or terms similar thereto are often used. They are not limited to direct connection but include connection through other elements where such connection is recognized as being equivalent by those skilled in the art.

### DETAILED DESCRIPTION

The various features and advantageous details of the subject matter disclosed herein are explained more fully with reference to the non-limiting embodiments described in detail in the following description.

The subject matter disclosed herein discloses an improved system for managing memory usage for multiple processing domains. More specifically, an improved method and apparatus is described for detecting a memory error in a system with multiple processing domains on a single integrated circuit die, where each of the processing domains utilizes a shared memory resource accessed via a shared memory controller. Each processing domain issues read and write commands to the shared memory controller for storing data in and reading data from the shared memory resource. As data is written to the shared memory resource, the processing domain generates a diagnostic code that may be used when reading the data back from the shared memory resource to verify that the data read is the same as the data that was written.

The diagnostic code is generated as a function of the data being written, the memory address to which the data is being written, and of a unique identifier corresponding to the processing domain which is writing the data. According to one embodiment of the invention, a checksum, such as a cyclic redundancy check (CRC), may be performed on the data and on the address within the shared memory resource to which the data is to be written. A CRC checksum is generated by an algorithm which receives data to be stored as an input and passes the data through a function, such as a polynomial function which outputs a unique signature based on the data received and on the function generating the signature. By including the address at which the data is to be written, the signature will be different than a signature generated solely based on the data. By further incorporating a unique identifier corresponding to the processing domain, identical data written to the same address by each processing domain would still generate a unique checksum for each processing domain. According to the invention, each processing domain utilizes a unique polynomial or other processing algorithm by which the checksum is generated. In either event, the resulting diagnostic code is a function of the processing domain which generated the code. The diagnostic code is stored with the data in the shared memory for verification when the data is read back from the shared memory resource.

When the data is read back from the shared memory resource, the processing domain separates the diagnostic code and the data being read. The processing domain generates another diagnostic code as a function of the data being read, the memory address from which the data is being read, and of the unique identifier corresponding to the processing domain which is reading the data. Inclusion of the memory address in generation of the diagnostic code allows the processing domain to check, for example, whether another set of data was erroneously written by the memory controller to that address. Because the diagnostic code includes the memory address, data that should have been written to a different address will include a diagnostic code that was generated as a function of the different address. Even if identical data intended for a different memory location is written to a particular address, the diagnostic code will correspond to the different memory address and the error made by the memory controller in writing data to an incorrect memory location will be detected when reading the data. Similarly, including a unique identifier and/or using a unique algorithm by which the diagnostic code is generated within each processing domain ensures that only the domain that wrote the data to the shared memory resource will be able to read the data from the memory resource. The other diagnostic code is generated in an identical manner to the initial diagnostic code as the data is read from the shared memory resource. The other diagnostic code is then compared to the initial diagnostic code. If both diagnostic codes are the same, the processing domain can be confident that the data read from the shared memory resource is the same as the data that was originally written.

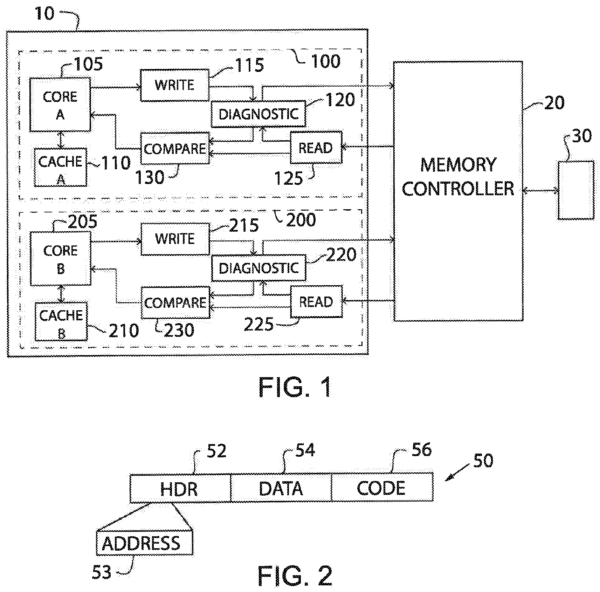

Turning initially to Fig. 1, an exemplary multicore microprocessor 10 incorporating one embodiment of the present invention is illustrated. According to the illustrated embodiment, the microprocessor 10 includes a first processing domain 100 and a second processing domain 200. The first processing domain 100 includes a first processor core 105, and the second processing domain 200 includes a second processor core 205. Although, the microprocessor 10 is shown with two cores 105, 205 and two processing domains 100, 200, this is for ease of illustration and is not intended to be limiting. It is contemplated that the microprocessor 10 may include more than two cores and processing domains. Each processing domain 100, 200 further includes a local cache memory 110, 210. The first processor core 105 can read from and write to the first cache 110, and the second processor core 205 can read from and write to the second cache 210.

Each processing domain 100, 200 is also in communication with a shared memory resource 30 via a common memory controller 20. Although illustrated as a single block, it is contemplated that the shared memory resource 30 may be a single memory chip or multiple memory chips each in communication with the memory controller 20. The first processing domain 100 includes a first write channel 115 receiving data from the first processing core 105. The first write channel 115 is in communication with a first diagnostic circuit 120 to generate a diagnostic code corresponding to data being written to the shared memory resource 30. The first processing domain 100 also includes a first read channel 125 receiving data from the memory controller 20. The first read channel 125 is also in communication with the first diagnostic circuit 120 to generate a diagnostic code corresponding to data being read from the shared memory resource 30. A first compare circuit 130 is in communication with both the first read channel 125 and the first diagnostic circuit 120 to compare the diagnostic code generated when writing the data to the diagnostic code generated when reading the data. The second processing domain 200 includes a second write channel 215 receiving data from the second processing core 205. The second write channel 215 is in communication with a second diagnostic circuit 220 to generate a diagnostic code corresponding to data being written to the shared memory resource 30. The second processing domain 200 also includes a second read channel 225 receiving data from the memory controller 20. The second read channel 225 is also in communication with the second diagnostic circuit 220 to generate a diagnostic code corresponding to data being read from the shared memory resource 30. A second compare circuit 230 is in communication with both the second read channel 225 and the second diagnostic circuit 220 to compare the diagnostic code generated when writing the data to the diagnostic code generated when reading the data.

Although illustrated as separate circuits within the respective processing domains, it is contemplated that circuits may be combined in whole or in part with other circuits. For example, the diagnostic circuit 120, 220 and the compare circuit 130, 230 may be formed as a single circuit. The separate circuits are utilized for ease of illustration and for ease of discussion of various functions performed during a read or write between the processor 10 and the shared memory resource 30. Similarly, each channel 115, 125, 215, 225 is illustrated as a separate communication channel. The separate channels are illustrated for ease of illustration and discussion of the communication along each channel. It is contemplated that a single communication bus may be provided for each processing domain 100, 200 where a single processing bus includes both the respective read and write channel for the corresponding processing domain. It is further contemplated that a single communication bus may be provided between the processor 10 and the memory controller 20 and that a suitable bus interface is included on the processor 10 to route communication between each processing domain and the memory controller. According to still another embodiment of the invention, it is contemplated that each processor core 105, 205 may be implemented on a separate processor rather than as a multi-core processor, where each of the separate processors writes to the shared memory controller 20 and shared memory 30.

In operation, each processing domain 100, 200 is able to detect memory errors related to data written to the shared memory resource 30 by the respective processing domain. For convenience, the process will be discussed with respect to the first processing domain 100. This is not intended to be limiting and it is understood that the second processing domain 200 or still additional processing domains may be configured to execute the same steps to detect a memory error for data written to the shared memory resource 30 by the corresponding processing domain.

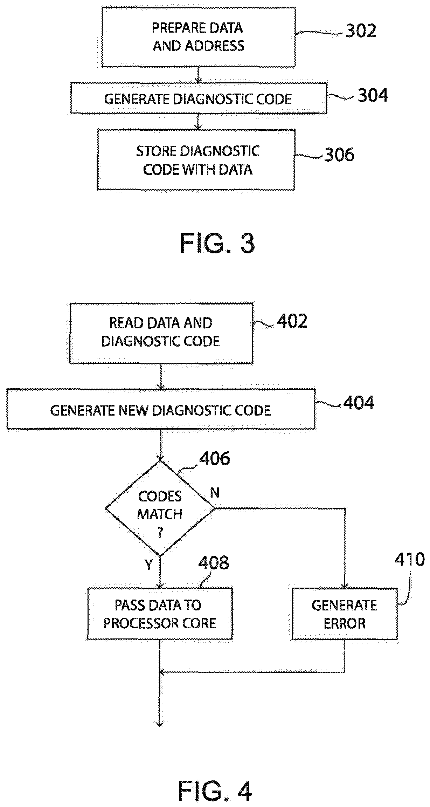

Turning next to Fig. 3, steps for writing data to the shared memory resource 30 are illustrated. At step 302, the data and address are prepared by the processing core 105 for writing to the shared memory resource 30. With reference also to Fig. 2, an exemplary data packet 50 is illustrated which includes a header 52, data 54 to be written, and a diagnostic code 56. The address 53 at which the data 54 is to be written is included in the header information. This data packet 50 is intended to be exemplary only and not limiting. It is contemplated that the header 52 may include only an address 53 at which the data 54 is to be written. Optionally, the header may also include, for example, a source, indicating to the memory controller 20 from which processing domain 100 the data is being sent, or other control commands and or status flags to manage the read and write process between each processing domain 100 and the shared memory resource. According to still another embodiment of the invention, an address bus, separate from a data bus, may be provided between each processing domain 100 and the memory controller 20, where the address 53 at which the data 54 is to be written within the shared memory resource 30 is provided on the address bus by the processor core 105 and the data 54 is provided on the data bus by the processor core 105.

With reference again to Fig. 3, the processing domain 100 next generates a diagnostic code 56 for the data to be written to the shared memory resource 30, as shown in step 304. The diagnostic circuit 120 receives the data 54 and address 53 at which the data is to be written. These may be provided in a single data packet 50 or via separate buses within the processing domain 100. The diagnostic circuit 120 is then configured to generate a diagnostic code as a function of the data 54 and of the address 53 at which the data is to be written. It is contemplated that the data 54 may include, for example, between sixteen and one hundred twenty-eight (16-128) bits. The address may similarly be defined by a sixteen to one hundred twenty-eight (16-128) bit memory location. The length of the data 54 and the length of the address 53 are defined by the shared memory resource 30 and/or the memory controller 20 used to transfer the data 54 between the processing domain 100 and the shared memory resource. The data 54 and address 53 are provided to the diagnostic circuit and passed through a suitable algorithm to generate the diagnostic code 56. The diagnostic code may be generated via a hash algorithm, where the hash algorithm is configured to map a set of data values to a set of code values with a high probability that a change in the data values will result in a change in the code generated. As previously indicated, the diagnostic code 56 may be a CRC checksum, and the algorithm may be any suitable algorithm to generate the CRC checksum. According to still other embodiments, the diagnostic code 56 may be generated by an Error Correcting Code (ECC) or a Secure Hash Algorithm (SHA).

It is further contemplated that a unique identifier for each processing domain 100 may be included with the data 54 and the address 53 to further identify the data 54 as having been written to the shared memory resource 30 by a particular processing domain 100. According to one embodiment of the invention, one bit of the address 53 or of the data 54 to be stored to the shared memory resource 30 may be used to define the unique identifier. If there are only two processing domains, as illustrated in Fig. 1, the highest address bit may be used to define a particular processing domain. The first processing domain 100 may be assigned zero (0) as an identifier, and the second processing domain 200 may be assigned one (1) as an identifier. If, for example, a thirty-two (32) bit address 53 is utilized, the processing core 105 may write an address to the lower thirty-one (31) bits. The upper bit may be tied to a logical zero for the first processing domain 100 and to a logical one for the second processing domain 200 such that the address is always defined as a function of the processing domain. Optionally, each processing core 105 may be configured to set the upper bit to the respective identifier as it writes the remaining bits of the address. Similarly, two bits may be reserved for unique identifiers if there are four processing domains and so on for a greater number of processing domains. According to still another option, a separate data byte may be defined in which up to two hundred fifty-five unique codes may be defined for separate processing domains. According to yet another option, the source of the data 54, defining one of the processing domains 100, may be included in the header 52 and may serve as the unique identifier. The separate data byte may be passed to the algorithm generating the diagnostic code in tandem with the data 54 and the address 53, such that the CRC is determined as a function of the unique identifier, the data, and the address at which the data is to be written.

According to yet another aspect of the invention, the unique identifier may be a unique algorithm selected for each processing domain 100. When each processing domain 100 passes the data 54 and address 53 to the algorithm, a different diagnostic code 56, or checksum, would be generated for the processing domain according to the selected algorithm. As a result, identical data being written to the same address would still generate a different diagnostic code 56 for each processing domain 1 00. Thus, the processing domain 100 could verify that data read back from the shared memory resource 30 was, in fact, written by that processing domain, as will be discussed in more detail below.

Referring again to Fig. 3, the diagnostic code 56 is written to the shared memory resource 30 along with the data 54 at the desired address 53, as shown in step 306. According to one embodiment of the invention, the diagnostic circuit 120 appends the diagnostic code 56 to the data 54 and transmits both the data 54 and the diagnostic code 56 to the memory controller 20 via a data bus. The address 53 may be passed to the memory controller 20 either directly from the processing core 105 or via the diagnostic circuit 120 on an address bus. Optionally, the address 53 is passed first to the diagnostic circuit 120, for example, in a header 52, and the data packet 50 is passed as a single object from the diagnostic circuit 120 to the memory controller 20. Once the memory controller 20 has received the address 53, data 54, and diagnostic code 56, the memory controller 20 manages storing the data 54 and the diagnostic code 56 in the shared memory resource 30.

Turning next to Fig. 4, steps for reading data from the shared memory resource 30 are illustrated. At step 402, the processing domain 100 issues a read request to the memory controller 20. The read request identifies a memory address 53 from which the processing domain 100 wishes to read data 54. The memory controller 20 manages the data access with the shared memory resource 30 and provides the requested data 54 from the shared memory resource 30. When the memory controller 20 reads the data 54, the diagnostic code 56 corresponding to the data 54 is also read. The data 54 and diagnostic code 56 are stored in consecutive bytes of memory and, therefore, a read of the shared memory resource 30 defines the desired address 53 and requests a length of data to be read that is sufficient to return both the data 54 and the diagnostic code 56 which was previously stored with the data 54.

During the read process, the processing domain 100 performs a check on the data read back from the shared memory resource 30 to verify that it corresponds to the data originally written. When the data 54 and diagnostic code 56 are transferred from the shared memory resource 30 to the processing domain 100 by the memory controller 20, the read channel 125 is configured to split the data 54 and the diagnostic code 56 from each other for separate processing. The read channel 125 may, for example, connect the portion of the data bus on which the data 54 is transmitted to the diagnostic circuit 120 and the portion of the data bus on which the diagnostic code 56 is transmitted to a compare circuit 130. As shown in step 404, another diagnostic code is generated during the read process. The diagnostic circuit 120 utilizes the same algorithm used during the write process to generate the new diagnostic code. The diagnostic circuit 120 receives the data 54 read from the shared memory resource 30 by the memory controller 20. The diagnostic circuit 120 may also receive the desired memory address 53 from which the data 54 was read directly from the processing core 105. The same address may be passed both to the diagnostic circuit 120 and to the memory controller 20 during the read request to avoid potential errors in the address being introduced while reading the data. The diagnostic circuit 120 is also aware of the unique identifier corresponding to the processing domain 100. Whether the unique identifier is part of the memory address, a separate bit or byte embedded within the data, or a unique algorithm used to generate the diagnostic code, the diagnostic circuit 120 utilizes the unique identifier to generate the diagnostic code in an identical manner during the read process as it does during the write process. As a result, the two diagnostic codes should be identical.

After generating the second diagnostic code during the read process, the diagnostic circuit 120 passes the second diagnostic code to the compare circuit 130. As shown in step 406, the compare circuit 130 is configured to determine whether the original diagnostic code, obtained from the shared memory resource 30 is the same as the new diagnostic code generated during the read process. If the two diagnostic codes match, the data 54 which was read from the shared memory resource 30 is verified as matching the data which was originally written and, as shown in step 408, the data is then passed to the processing core 105 for subsequent use by the application or control program which originally initiated the read request. If, however, the two diagnostic codes do not match, the compare circuit 130 generates an error, as shown in step 410 and the processor core 105 takes action based on receiving an error message rather than upon receiving the requested data.

If the two diagnostic codes do not match, this could be an indication of an error occurring at a number of different steps between the microprocessor 10 and the shared memory resource 30. For example, an error may occur in the data being written to or read from the shared memory resource. If the data does not match between a write and a read, different diagnostic codes will be generated. Because two processing domains 100, 200 are sharing a single memory controller, the potential exists for an error in an address line during a write resulting in one processing domain 100 overwriting a memory address reserved for the other processing domain 200. However, when the second processing domain 200 attempts to read data from that address, the diagnostic code which was saved with the data was generated as a function of a different address. Thus, when the data is read back, the second processing domain 200 generates a different diagnostic code, using the address at which the first processing domain erroneously wrote to rather than the address at which the data was intended to be stored. Thus, the second processing domain is aware that the data stored in that memory location is not the same data as was previously written to that address by the second processing domain.

If one processing domain 100 detects that an error occurred in reading data from the shared memory resource 30, the processing domain 100 that detected the error may notify the other processing domain 200 of the error. It is contemplated that a separate communication bus or dedicated signal lines may exist between the two processing domains 100, 200 by which such an error notification may be transmitted.

It should be understood that the invention is not limited in its application to the details of construction and arrangements of the components set forth herein. The invention is capable of other embodiments and of being practiced or carried out in various ways. Variations and modifications of the foregoing are within the scope of the present invention. It also being understood that the invention disclosed and defined herein extends to all alternative combinations of two or more of the individual features mentioned or evident from the text and/or drawings. All of these different combinations constitute various alternative aspects of the present invention. The embodiments described herein explain the best modes known for practicing the invention and will enable others skilled in the art to utilize the invention.

## Claims

1. A method for detecting a memory error, the method comprising the steps of:
writing (302) first data to a first memory address in a shared memory resource from a first processing domain;
generating (304), using a first algorithm, a first diagnostic code with the first processing domain as a function of the first data and of the first memory address;
appending (306) the first diagnostic code to the first data such that the first diagnostic code is written in the shared memory resource with the corresponding first data;
reading (402), from the first memory address, the first data and the first diagnostic code from the shared memory resource back to the first processing domain;
verifying (404, 406) that the first data read from the shared memory resource matches the first data written to the shared memory resource with the first processing domain;
writing (302) second data to a second memory address in the shared memory resource from a second processing domain;
generating (304), using a second algorithm different from the first algorithm, a second diagnostic code with the second processing domain as a function of the second data and of the second memory address;
appending (306) the second diagnostic code to the second data such that the second diagnostic code is written in the shared memory resource with the corresponding second data;
reading (402), from the second memory address, the second data and the second diagnostic code from the shared memory resource back to the second processing domain; and
verifying (404, 406) that the second data read from the shared memory resource matches the second data written to the shared memory resource with the second processing domain,
wherein the first algorithm is a first unique algorithm selected for the first processing domain and wherein the second algorithm is a second unique algorithm selected for the second processing domain.

2. The method of claim 1 wherein the first diagnostic code is a checksum generated by passing the first data and the first memory address through a corresponding checksum algorithm.

3. The method of claim 1 or 2 wherein verifying that the first data read from the shared memory resource matches the first data written to the shared memory resource further comprises the steps of:
generating, using the first algorithm, another diagnostic code with the first processing domain as a function of the first data and the first memory address with the first processing domain as the first data is read from the shared memory resource;
comparing the first diagnostic code read from the shared memory resource to the other diagnostic code with the first processing domain; and
verifying that the first data read from the shared memory resource matches the first data written to the shared memory resource when the first diagnostic code read from the shared memory resource matches the other diagnostic code.

4. The method of claim 3 wherein the first processing domain generates a memory error when the first diagnostic code read from the shared memory resource does not match the other diagnostic code.

5. The method of claim 1 wherein the first processing domain and the second processing domain both use a single memory controller for writing the first data and the second data, respectively, to the shared memory resource.

6. The method of claim 1 wherein the step of verifying that the first data read from the shared memory resource matches the first data written to the shared memory resource with the first processing domain is configured to use the first unique algorithm, and
the step of verifying that the second data read from the shared memory resource matches the second data written to the shared memory resource with the second processing domain is configured to use the second unique algorithm.

7. The method of one of claims 3 to 4 wherein verifying that the second data read from the shared memory resource matches the second data written to the shared memory resource further comprises the steps of:
generating, using the second algorithm, another second diagnostic code with the second processing domain as a function of the second data and the second memory address with the second processing domain as the second data is read from the shared memory resource,
comparing the second diagnostic code read from the shared memory resource to the other second diagnostic code with the second processing domain, and
verifying that the second data read from the shared memory resource matches the second data written to the shared memory resource when the second diagnostic code read from the shared memory resource matches the other second diagnostic code.

8. The method of claim 7 wherein:
the first processing domain generates a first memory error when the first diagnostic code read from the shared memory resource does not match the other diagnostic code, and
the second processing domain generates a second memory error when the second diagnostic code read from the shared memory resource does not match the other second diagnostic code; and/or
wherein:
the first processing domain is in communication with the second processing domain,
the first processing domain notifies the second processing domain of the first memory error, and
the second processing domain notifies the first processing domain of the second memory error.

9. An apparatus for detecting a memory error, comprising:
a shared memory resource (30) configured to store first data and second data;
a memory controller (20) configured to manage reading the first and second data from and writing the first and second data to the shared memory resource;
a first processing domain (100) in communication with the memory controller, wherein the first processing domain is configured to:
write the first data to the shared memory resource via the memory controller,
generate, using a first algorithm, a first diagnostic code corresponding to the first processing domain, the first data to be written, and to a first memory address at which the first data is to be written,
append the first diagnostic code to the first data as it is written to the shared memory resource,
read, from the first memory address, the first data from the shared memory resource via the memory controller, and
verify that the first data read from the shared memory resource matches the first data written to the shared memory resource; and
a second processing (200) domain in communication with the memory controller, wherein the second processing domain is configured to:
write the second data to the shared memory resource via the memory controller,
generate, using a second algorithm different from the first algorithm, a second diagnostic code corresponding to the second processing domain, the second data to be written, and to a second memory address at which the second data is to be written,
append the second diagnostic code to the second data as it is written to the shared memory resource,
read, from the second memory address, the second data from the shared memory resource via the memory controller, and
verify that the second data read from the shared memory resource matches the second data written to the shared memory resource,
wherein the first algorithm is a first unique algorithm selected for the first processing domain and wherein the second algorithm is a second unique algorithm selected for the second processing domain.

10. The apparatus of claim 9 wherein:
the first processing domain is further configured to verify, using the first unique algorithm, that the first data read from the shared memory resource matches the first data written to the shared memory resource, and
the second processing domain is further configured to verify, using the second unique algorithm, that the second data read from the shared memory resource matches the second data written to the shared memory resource.

11. The apparatus of claim 10 wherein:
the first processing domain is configured to verify that the first data read from the shared memory resource by the first processing domain matches the first data written to the shared memory resource by the first processing domain by:
generating, using the first algorithm, another first diagnostic code with the first processing domain as a function of the first data read and the first memory address from which the first data was read, and
verifying that the first data read from the shared memory resource by the first processing domain matches the first data written to the shared memory resource by the first processing domain when the first diagnostic code read from the shared memory resource matches the other first diagnostic code; and
the second processing domain is configured to verify that the second data read from the shared memory resource by the second processing domain matches the second data written to the shared memory resource by the second processing domain by:
generating, using the second algorithm, another second diagnostic code with the second processing domain as a function of the second data read and the second memory address from which the second data was read, and
verifying that the second data read from the shared memory resource by the second processing domain matches the second data written to the shared memory resource by the second processing domain when the second diagnostic code read from the shared memory resource matches the other second diagnostic code.

12. The apparatus of claim 11 wherein:
the first processing domain generates a first memory error when the first diagnostic code read from the shared memory resource does not match the other first diagnostic code, and
the second processing domain generates a second memory error when the second diagnostic code read from the shared memory resource does not match the other second diagnostic code; and/or
wherein:
the first processing domain is in communication with the second processing domain,
the first processing domain notifies the second processing domain of the first memory error, and
the second processing domain notifies the first processing domain of the second memory error.

## Patentansprüche

1. Verfahren zum Erkennen eines Speicherfehlers, wobei das Verfahren die folgenden Schritte umfasst:
Schreiben (302) erster Daten von einer ersten Verarbeitungsdomäne an eine erste Speicheradresse in einer gemeinsam genutzten Speicherressource;
Erzeugen (304) eines ersten Diagnosecodes mit der ersten Verarbeitungsdomäne unter Verwendung eines ersten Algorithmus in Abhängigkeit von den ersten Daten und der ersten Speicheradresse;
Anhängen (306) des ersten Diagnosecodes an die ersten Daten, sodass der erste Diagnosecode zusammen mit den entsprechenden ersten Daten in die gemeinsam genutzte Speicherressource geschrieben wird;
Zurücklesen (402) der ersten Daten und des ersten Diagnosecodes von der ersten Speicheradresse aus der gemeinsam genutzten Speicherressource in die erste Verarbeitungsdomäne;
Überprüfen (404, 406) mit der ersten Verarbeitungsdomäne, dass die aus der gemeinsam genutzten Speicherressource gelesenen ersten Daten mit den in die gemeinsam genutzte Speicherressource geschriebenen ersten Daten übereinstimmen;
Schreiben (302) zweiter Daten von einer zweiten Verarbeitungsdomäne an eine zweite Speicheradresse in der gemeinsam genutzten Speicherressource;
Erzeugen (304) eines zweiten Diagnosecodes mit der zweiten Verarbeitungsdomäne unter Verwendung eines zweiten Algorithmus, der von dem ersten Algorithmus verschieden ist, in Abhängigkeit von den zweiten Daten und der zweiten Speicheradresse;
Anhängen (306) des zweiten Diagnosecodes an die zweiten Daten, sodass der zweite Diagnosecode zusammen mit den entsprechenden zweiten Daten in die gemeinsam genutzte Speicherressource geschrieben wird;
Zurücklesen (402) der zweiten Daten und des zweiten Diagnosecodes von der zweiten Speicheradresse aus der gemeinsam genutzten Speicherressource in die zweite Verarbeitungsdomäne; und
Überprüfen (404, 406) mit der zweiten Verarbeitungsdomäne, dass die aus der gemeinsam genutzten Speicherressource gelesenen zweiten Daten mit den in die gemeinsam genutzte Speicherressource geschriebenen zweiten Daten übereinstimmen,
wobei der erste Algorithmus ein erster eindeutiger Algorithmus ist, der für die erste Verarbeitungsdomäne ausgewählt ist, und wobei der zweite Algorithmus ein zweiter eindeutiger Algorithmus ist, der für die zweite Verarbeitungsdomäne ausgewählt ist.

2. Verfahren nach Anspruch 1, wobei der erste Diagnosecode eine Prüfsumme ist, die erzeugt wird, indem die ersten Daten und die erste Speicheradresse durch einen entsprechenden Prüfsummenalgorithmus geleitet werden.

3. Verfahren nach Anspruch 1 oder 2, wobei das Überprüfen, dass die aus der gemeinsam genutzten Speicherressource gelesenen ersten Daten mit den in die gemeinsam genutzte Speicherressource geschriebenen ersten Daten übereinstimmen, ferner die folgenden Schritte umfasst:
Erzeugen eines weiteren Diagnosecodes mit der ersten Verarbeitungsdomäne unter Verwendung des ersten Algorithmus in Abhängigkeit von den ersten Daten und der ersten Speicheradresse mit der ersten Verarbeitungsdomäne, während die ersten Daten aus der gemeinsam genutzten Speicherressource gelesen werden;
Vergleichen des aus der gemeinsam genutzten Speicherressource gelesenen ersten Diagnosecodes mit dem anderen Diagnosecode mit der ersten Verarbeitungsdomäne; und
Überprüfen, dass die aus der gemeinsam genutzten Speicherressource gelesenen ersten Daten mit den in die gemeinsam genutzte Speicherressource geschriebenen ersten Daten übereinstimmen, wenn der aus der gemeinsam genutzten Speicherressource gelesene erste Diagnosecode mit dem anderen Diagnosecode übereinstimmt.

4. Verfahren nach Anspruch 3, wobei die erste Verarbeitungsdomäne einen Speicherfehler erzeugt, wenn der aus der gemeinsam genutzten Speicherressource gelesene erste Diagnosecode nicht mit dem anderen Diagnosecode übereinstimmt.

5. Verfahren nach Anspruch 1, wobei die erste Verarbeitungsdomäne und die zweite Verarbeitungsdomäne beide eine einzige Speichersteuerung zum Schreiben der ersten Daten beziehungsweise der zweiten Daten in die gemeinsam genutzte Speicherressource verwenden.

6. Verfahren nach Anspruch 1, wobei der Schritt des Überprüfens, dass die aus der gemeinsam genutzten Speicherressource gelesenen ersten Daten mit den in die gemeinsam genutzte Speicherressource geschriebenen ersten Daten übereinstimmen, mit der ersten Verarbeitungsdomäne dazu eingerichtet ist, den ersten eindeutigen Algorithmus zu verwenden, und
der Schritt des Überprüfens, dass die aus der gemeinsam genutzten Speicherressource gelesenen zweiten Daten mit den in die gemeinsam genutzte Speicherressource geschriebenen zweiten Daten übereinstimmen, mit der zweiten Verarbeitungsdomäne dazu eingerichtet ist, den zweiten eindeutigen Algorithmus zu verwenden.

7. Verfahren nach einem der Ansprüche 3 bis 4, wobei das Überprüfen, dass die aus der gemeinsam genutzten Speicherressource gelesenen zweiten Daten mit den in die gemeinsam genutzte Speicherressource geschriebenen zweiten Daten übereinstimmen, ferner die folgenden Schritte umfasst:
Erzeugen eines weiteren zweiten Diagnosecodes mit der zweiten Verarbeitungsdomäne unter Verwendung des zweiten Algorithmus in Abhängigkeit von den zweiten Daten und der zweiten Speicheradresse mit der zweiten Verarbeitungsdomäne, während die zweiten Daten aus der gemeinsam genutzten Speicherressource gelesen werden,
Vergleichen des aus der gemeinsam genutzten Speicherressource gelesenen zweiten Diagnosecodes mit dem anderen zweiten Diagnosecode mit der zweiten Verarbeitungsdomäne, und
Überprüfen, dass die aus der gemeinsam genutzten Speicherressource gelesenen zweiten Daten mit den in die gemeinsam genutzte Speicherressource geschriebenen zweiten Daten übereinstimmen, wenn der aus der gemeinsam genutzten Speicherressource gelesene zweite Diagnosecode mit dem anderen zweiten Diagnosecode übereinstimmt.

8. Verfahren nach Anspruch 7, wobei:
die erste Verarbeitungsdomäne einen ersten Speicherfehler erzeugt, wenn der aus der gemeinsam genutzten Speicherressource gelesene erste Diagnosecode nicht mit dem anderen Diagnosecode übereinstimmt, und
die zweite Verarbeitungsdomäne einen zweiten Speicherfehler erzeugt, wenn der aus der gemeinsam genutzten Speicherressource gelesene zweite Diagnosecode nicht mit dem anderen zweiten Diagnosecode übereinstimmt; und/oder
wobei:
die erste Verarbeitungsdomäne mit der zweiten Verarbeitungsdomäne in Kommunikation steht,
die erste Verarbeitungsdomäne die zweite Verarbeitungsdomäne über den ersten Speicherfehler benachrichtigt, und
die zweite Verarbeitungsdomäne die erste Verarbeitungsdomäne über den zweiten Speicherfehler benachrichtigt.

9. Vorrichtung zum Erkennen eines Speicherfehlers, umfassend:
eine gemeinsam genutzte Speicherressource (30), die dazu eingerichtet ist, erste Daten und zweite Daten zu speichern;
eine Speichersteuerung (20), die dazu eingerichtet ist, das Lesen der ersten und zweiten Daten aus der gemeinsam genutzten Speicherressource und das Schreiben der ersten und zweiten Daten in die gemeinsam genutzte Speicherressource zu verwalten;
eine erste Verarbeitungsdomäne (100) in Kommunikation mit der Speichersteuerung, wobei die erste Verarbeitungsdomäne dazu eingerichtet ist:
die ersten Daten über die Speichersteuerung in die gemeinsam genutzte Speicherressource zu schreiben,
unter Verwendung eines ersten Algorithmus einen ersten Diagnosecode zu erzeugen, der der ersten Verarbeitungsdomäne, den zu schreibenden ersten Daten und einer ersten Speicheradresse, an die die ersten Daten zu schreiben sind, entspricht,
den ersten Diagnosecode an die ersten Daten anzuhängen, während diese in die gemeinsam genutzte Speicherressource geschrieben werden,
die ersten Daten von der ersten Speicheradresse über die Speichersteuerung aus der gemeinsam genutzten Speicherressource zu lesen, und
zu überprüfen, dass die aus der gemeinsam genutzten Speicherressource gelesenen ersten Daten mit den in die gemeinsam genutzte Speicherressource geschriebenen ersten Daten übereinstimmen; und
eine zweite Verarbeitungs- (200) Domäne in Kommunikation mit der Speichersteuerung, wobei die zweite Verarbeitungsdomäne dazu eingerichtet ist:
die zweiten Daten über die Speichersteuerung in die gemeinsam genutzte Speicherressource zu schreiben,
unter Verwendung eines zweiten Algorithmus, der von dem ersten Algorithmus verschieden ist, einen zweiten Diagnosecode zu erzeugen, der der zweiten Verarbeitungsdomäne, den zu schreibenden zweiten Daten und einer zweiten Speicheradresse, an die die zweiten Daten zu schreiben sind, entspricht,
den zweiten Diagnosecode an die zweiten Daten anzuhängen, während diese in die gemeinsam genutzte Speicherressource geschrieben werden,
die zweiten Daten von der zweiten Speicheradresse über die Speichersteuerung aus der gemeinsam genutzten Speicherressource zu lesen, und
zu überprüfen, dass die aus der gemeinsam genutzten Speicherressource gelesenen zweiten Daten mit den in die gemeinsam genutzte Speicherressource geschriebenen zweiten Daten übereinstimmen,
wobei der erste Algorithmus ein erster eindeutiger Algorithmus ist, der für die erste Verarbeitungsdomäne ausgewählt ist, und wobei der zweite Algorithmus ein zweiter eindeutiger Algorithmus ist, der für die zweite Verarbeitungsdomäne ausgewählt ist.

10. Vorrichtung nach Anspruch 9, wobei:
die erste Verarbeitungsdomäne ferner dazu eingerichtet ist, unter Verwendung des ersten eindeutigen Algorithmus zu überprüfen, dass die aus der gemeinsam genutzten Speicherressource gelesenen ersten Daten mit den in die gemeinsam genutzte Speicherressource geschriebenen ersten Daten übereinstimmen, und
die zweite Verarbeitungsdomäne ferner dazu eingerichtet ist, unter Verwendung des zweiten eindeutigen Algorithmus zu überprüfen, dass die aus der gemeinsam genutzten Speicherressource gelesenen zweiten Daten mit den in die gemeinsam genutzte Speicherressource geschriebenen zweiten Daten übereinstimmen.

11. Vorrichtung nach Anspruch 10, wobei:
die erste Verarbeitungsdomäne dazu eingerichtet ist, wie folgt zu überprüfen, dass die von der ersten Verarbeitungsdomäne aus der gemeinsam genutzten Speicherressource gelesenen ersten Daten mit den von der ersten Verarbeitungsdomäne in die gemeinsam genutzte Speicherressource geschriebenen ersten Daten übereinstimmen:
Erzeugen eines weiteren ersten Diagnosecodes mit der ersten Verarbeitungsdomäne unter Verwendung des ersten Algorithmus in Abhängigkeit von den gelesenen ersten Daten und der ersten Speicheradresse, von der die ersten Daten gelesen wurden, und
Überprüfen, dass die von der ersten Verarbeitungsdomäne aus der gemeinsam genutzten Speicherressource gelesenen ersten Daten mit den von der ersten Verarbeitungsdomäne in die gemeinsam genutzte Speicherressource geschriebenen ersten Daten übereinstimmen, wenn der aus der gemeinsam genutzten Speicherressource gelesene erste Diagnosecode mit dem anderen ersten Diagnosecode übereinstimmt; und
die zweite Verarbeitungsdomäne dazu eingerichtet ist, wie folgt zu überprüfen, dass die von der zweiten Verarbeitungsdomäne aus der gemeinsam genutzten Speicherressource gelesenen zweiten Daten mit den von der zweiten Verarbeitungsdomäne in die gemeinsam genutzte Speicherressource geschriebenen zweiten Daten übereinstimmen:
Erzeugen eines weiteren zweiten Diagnosecodes mit der zweiten Verarbeitungsdomäne unter Verwendung des zweiten Algorithmus in Abhängigkeit von den gelesenen zweiten Daten und der zweiten Speicheradresse, von der die zweiten Daten gelesen wurden, und
Überprüfen, dass die von der zweiten Verarbeitungsdomäne aus der gemeinsam genutzten Speicherressource gelesenen zweiten Daten mit den von der zweiten Verarbeitungsdomäne in die gemeinsam genutzte Speicherressource geschriebenen zweiten Daten übereinstimmen, wenn der aus der gemeinsam genutzten Speicherressource gelesene zweite Diagnosecode mit dem anderen zweiten Diagnosecode übereinstimmt.

12. Vorrichtung nach Anspruch 11, wobei:
die erste Verarbeitungsdomäne einen ersten Speicherfehler erzeugt, wenn der aus der gemeinsam genutzten Speicherressource gelesene erste Diagnosecode nicht mit dem anderen ersten Diagnosecode übereinstimmt, und
die zweite Verarbeitungsdomäne einen zweiten Speicherfehler erzeugt, wenn der aus der gemeinsam genutzten Speicherressource gelesene zweite Diagnosecode nicht mit dem anderen zweiten Diagnosecode übereinstimmt; und/oder
wobei:
die erste Verarbeitungsdomäne mit der zweiten Verarbeitungsdomäne in Kommunikation steht,
die erste Verarbeitungsdomäne die zweite Verarbeitungsdomäne über den ersten Speicherfehler benachrichtigt, und
die zweite Verarbeitungsdomäne die erste Verarbeitungsdomäne über den zweiten Speicherfehler benachrichtigt.

## Revendications

1. Procédé de détection d'une erreur de mémoire, le procédé comprenant les étapes consistant à :
écrire (302) des premières données à une première adresse mémoire dans une ressource de mémoire partagée à partir d'un premier domaine de traitement ;
générer (304), en utilisant un premier algorithme, un premier code de diagnostic avec le premier domaine de traitement en fonction des premières données et de la première adresse mémoire ;
ajouter (306) le premier code de diagnostic à la suite des premières données de telle sorte que le premier code de diagnostic soit écrit dans la ressource de mémoire partagée avec les premières données correspondantes ;
relire (402), depuis la première adresse mémoire, les premières données et le premier code de diagnostic depuis la ressource de mémoire partagée vers le premier domaine de traitement ;
vérifier (404, 406) que les premières données lues depuis la ressource de mémoire partagée correspondent aux premières données écrites dans la ressource de mémoire partagée avec le premier domaine de traitement ;
écrire (302) des deuxièmes données à une deuxième adresse mémoire dans la ressource de mémoire partagée à partir d'un deuxième domaine de traitement ;
générer (304), en utilisant un deuxième algorithme différent du premier algorithme, un deuxième code de diagnostic avec le deuxième domaine de traitement en fonction des deuxièmes données et de la deuxième adresse mémoire ;
ajouter (306) le deuxième code de diagnostic à la suite des deuxièmes données de telle sorte que le deuxième code de diagnostic soit écrit dans la ressource de mémoire partagée avec les deuxièmes données correspondantes ;
relire (402), depuis la deuxième adresse mémoire, les deuxièmes données et le deuxième code de diagnostic depuis la ressource de mémoire partagée vers le deuxième domaine de traitement ; et
vérifier (404, 406) que les deuxièmes données lues depuis la ressource de mémoire partagée correspondent aux deuxièmes données écrites dans la ressource de mémoire partagée avec le deuxième domaine de traitement,
dans lequel le premier algorithme est un premier algorithme unique sélectionné pour le premier domaine de traitement et dans lequel le deuxième algorithme est un deuxième algorithme unique sélectionné pour le deuxième domaine de traitement.

2. Procédé selon la revendication 1, dans lequel le premier code de diagnostic est une somme de contrôle générée en faisant passer les premières données et la première adresse mémoire par un algorithme de somme de contrôle correspondant.

3. Procédé selon la revendication 1 ou 2, dans lequel la vérification que les premières données lues depuis la ressource de mémoire partagée correspondent aux premières données écrites dans la ressource de mémoire partagée comprend en outre les étapes consistant à :
générer, en utilisant le premier algorithme, un autre code de diagnostic avec le premier domaine de traitement en fonction des premières données et de la première adresse mémoire avec le premier domaine de traitement lorsque les premières données sont lues depuis la ressource de mémoire partagée ;
comparer le premier code de diagnostic lu depuis la ressource de mémoire partagée à l'autre code de diagnostic avec le premier domaine de traitement ; et
vérifier que les premières données lues depuis la ressource de mémoire partagée correspondent aux premières données écrites dans la ressource de mémoire partagée lorsque le premier code de diagnostic lu depuis la ressource de mémoire partagée correspond à l'autre code de diagnostic.

4. Procédé selon la revendication 3, dans lequel le premier domaine de traitement génère une erreur de mémoire lorsque le premier code de diagnostic lu depuis la ressource de mémoire partagée ne correspond pas à l'autre code de diagnostic.

5. Procédé selon la revendication 1, dans lequel le premier domaine de traitement et le deuxième domaine de traitement utilisent tous deux un seul contrôleur de mémoire pour écrire les premières données et les deuxièmes données, respectivement, dans la ressource de mémoire partagée.

6. Procédé selon la revendication 1, dans lequel l'étape consistant à vérifier que les premières données lues depuis la ressource de mémoire partagée correspondent aux premières données écrites dans la ressource de mémoire partagée avec le premier domaine de traitement est configurée pour utiliser le premier algorithme unique, et
l'étape consistant à vérifier que les deuxièmes données lues depuis la ressource de mémoire partagée correspondent aux deuxièmes données écrites dans la ressource de mémoire partagée avec le deuxième domaine de traitement est configurée pour utiliser le deuxième algorithme unique.

7. Procédé selon l'une des revendications 3 à 4, dans lequel la vérification que les deuxièmes données lues depuis la ressource de mémoire partagée correspondent aux deuxièmes données écrites dans la ressource de mémoire partagée comprend en outre les étapes consistant à :
générer, en utilisant le deuxième algorithme, un autre deuxième code de diagnostic avec le deuxième domaine de traitement en fonction des deuxièmes données et de la deuxième adresse mémoire avec le deuxième domaine de traitement lorsque les deuxièmes données sont lues depuis la ressource de mémoire partagée,
comparer le deuxième code de diagnostic lu depuis la ressource de mémoire partagée à l'autre deuxième code de diagnostic avec le deuxième domaine de traitement, et
vérifier que les deuxièmes données lues depuis la ressource de mémoire partagée correspondent aux deuxièmes données écrites dans la ressource de mémoire partagée lorsque le deuxième code de diagnostic lu depuis la ressource de mémoire partagée correspond à l'autre deuxième code de diagnostic.

8. Procédé selon la revendication 7, dans lequel :
le premier domaine de traitement génère une première erreur de mémoire lorsque le premier code de diagnostic lu depuis la ressource de mémoire partagée ne correspond pas à l'autre code de diagnostic, et
le deuxième domaine de traitement génère une deuxième erreur de mémoire lorsque le deuxième code de diagnostic lu depuis la ressource de mémoire partagée ne correspond pas à l'autre deuxième code de diagnostic ; et/ou
dans lequel :
le premier domaine de traitement est en communication avec le deuxième domaine de traitement,
le premier domaine de traitement notifie la première erreur de mémoire au deuxième domaine de traitement, et
le deuxième domaine de traitement notifie la deuxième erreur de mémoire au premier domaine de traitement.

9. Appareil de détection d'une erreur de mémoire, comprenant :
une ressource de mémoire partagée (30) configurée pour stocker des premières données et des deuxièmes données ;
un contrôleur de mémoire (20) configuré pour gérer la lecture des premières et deuxièmes données depuis la ressource de mémoire partagée et l'écriture des premières et deuxièmes données dans la ressource de mémoire partagée ;
un premier domaine de traitement (100) en communication avec le contrôleur de mémoire, dans lequel le premier domaine de traitement est configuré pour :
écrire les premières données dans la ressource de mémoire partagée par l'intermédiaire du contrôleur de mémoire,
générer, en utilisant un premier algorithme, un premier code de diagnostic correspondant au premier domaine de traitement, aux premières données à écrire et à une première adresse mémoire à laquelle les premières données doivent être écrites,
ajouter le premier code de diagnostic à la suite des premières données lorsqu'elles sont écrites dans la ressource de mémoire partagée,
lire, depuis la première adresse mémoire, les premières données depuis la ressource de mémoire partagée par l'intermédiaire du contrôleur de mémoire, et
vérifier que les premières données lues depuis la ressource de mémoire partagée correspondent aux premières données écrites dans la ressource de mémoire partagée ; et
un deuxième domaine de (200) traitement en communication avec le contrôleur de mémoire, dans lequel le deuxième domaine de traitement est configuré pour :
écrire les deuxièmes données dans la ressource de mémoire partagée par l'intermédiaire du contrôleur de mémoire,
générer, en utilisant un deuxième algorithme différent du premier algorithme, un deuxième code de diagnostic correspondant au deuxième domaine de traitement, aux deuxièmes données à écrire et à une deuxième adresse mémoire à laquelle les deuxièmes données doivent être écrites,
ajouter le deuxième code de diagnostic à la suite des deuxièmes données lorsqu'elles sont écrites dans la ressource de mémoire partagée,
lire, depuis la deuxième adresse mémoire, les deuxièmes données depuis la ressource de mémoire partagée par l'intermédiaire du contrôleur de mémoire, et
vérifier que les deuxièmes données lues depuis la ressource de mémoire partagée correspondent aux deuxièmes données écrites dans la ressource de mémoire partagée,
dans lequel le premier algorithme est un premier algorithme unique sélectionné pour le premier domaine de traitement et dans lequel le deuxième algorithme est un deuxième algorithme unique sélectionné pour le deuxième domaine de traitement.

10. Appareil selon la revendication 9, dans lequel :
le premier domaine de traitement est en outre configuré pour vérifier, en utilisant le premier algorithme unique, que les premières données lues depuis la ressource de mémoire partagée correspondent aux premières données écrites dans la ressource de mémoire partagée, et
le deuxième domaine de traitement est en outre configuré pour vérifier, en utilisant le deuxième algorithme unique, que les deuxièmes données lues depuis la ressource de mémoire partagée correspondent aux deuxièmes données écrites dans la ressource de mémoire partagée.

11. Appareil selon la revendication 10, dans lequel :
le premier domaine de traitement est configuré pour vérifier que les premières données lues depuis la ressource de mémoire partagée par le premier domaine de traitement correspondent aux premières données écrites dans la ressource de mémoire partagée par le premier domaine de traitement en :
générant, en utilisant le premier algorithme, un autre premier code de diagnostic avec le premier domaine de traitement en fonction des premières données lues et de la première adresse mémoire depuis laquelle les premières données ont été lues, et
vérifiant que les premières données lues depuis la ressource de mémoire partagée par le premier domaine de traitement correspondent aux premières données écrites dans la ressource de mémoire partagée par le premier domaine de traitement lorsque le premier code de diagnostic lu depuis la ressource de mémoire partagée correspond à l'autre premier code de diagnostic ; et
le deuxième domaine de traitement est configuré pour vérifier que les deuxièmes données lues depuis la ressource de mémoire partagée par le deuxième domaine de traitement correspondent aux deuxièmes données écrites dans la ressource de mémoire partagée par le deuxième domaine de traitement en :
générant, en utilisant le deuxième algorithme, un autre deuxième code de diagnostic avec le deuxième domaine de traitement en fonction des deuxièmes données lues et de la deuxième adresse mémoire depuis laquelle les deuxièmes données ont été lues, et
vérifiant que les deuxièmes données lues depuis la ressource de mémoire partagée par le deuxième domaine de traitement correspondent aux deuxièmes données écrites dans la ressource de mémoire partagée par le deuxième domaine de traitement lorsque le deuxième code de diagnostic lu depuis la ressource de mémoire partagée correspond à l'autre deuxième code de diagnostic.

12. Appareil selon la revendication 11, dans lequel :
le premier domaine de traitement génère une première erreur de mémoire lorsque le premier code de diagnostic lu depuis la ressource de mémoire partagée ne correspond pas à l'autre premier code de diagnostic, et
le deuxième domaine de traitement génère une deuxième erreur de mémoire lorsque le deuxième code de diagnostic lu depuis la ressource de mémoire partagée ne correspond pas à l'autre deuxième code de diagnostic ; et/ou
dans lequel :
le premier domaine de traitement est en communication avec le deuxième domaine de traitement,
le premier domaine de traitement notifie la première erreur de mémoire au deuxième domaine de traitement, et
le deuxième domaine de traitement notifie la deuxième erreur de mémoire au premier domaine de traitement.
